(19) Europäisches Patentamt
European Patent Office
Office européen des brevets

(11) **EP 4 568 358 A1**

(12) **EUROPEAN PATENT APPLICATION**
published in accordance with Art. 153(4) EPC

(43) Date of publication:
**11.06.2025 Bulletin 2025/24**

(21) Application number: **23849298.7**

(22) Date of filing: **28.07.2023**

(51) International Patent Classification (IPC):
**H04W 52/02** (2009.01)

(52) Cooperative Patent Classification (CPC):
**H04L 5/00; H04W 24/02; H04W 24/08; H04W 52/02; Y02D 30/70**

(86) International application number:
**PCT/CN2023/109810**

(87) International publication number:
**WO 2024/027590 (08.02.2024 Gazette 2024/06)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **03.08.2022 CN 202210929174**

(71) Applicant: **Vivo Mobile Communication Co., Ltd.**
**Dongguan, Guangdong 523863 (CN)**

(72) Inventors:
• **LI, Jianhui**
**Dongguan, Guangdong 523863 (CN)**
• **PAN, Xueming**
**Dongguan, Guangdong 523863 (CN)**

(74) Representative: **Murgitroyd & Company**
**165-169 Scotland Street**
**Glasgow G5 8PL (GB)**

(54) **WAKE-UP SIGNAL INFORMATION DETERMINATION METHOD, TERMINAL, AND NETWORK SIDE DEVICE**

(57) This application discloses a method for determining information of a wake-up signal, a terminal, and a network side device, and pertains to the field of mobile communication. The method for determining information of a wake-up signal according to an embodiment of this application includes: a terminal obtains at least one piece of WUS configuration information; and the terminal determines at least one of the following based on the at least one piece of WUS configuration information: a target power reference source for transmitting an uplink wake-up signal; and transmission power of the uplink wake-up signal.

200

S210

A terminal obtains at least one piece of WUS configuration information

S220

The terminal determines a target power reference source for transmitting an uplink wake-up signal and/or transmission power of the uplink wake-up signal based on the at least one piece of WUS configuration information

FIG. 2

EP 4 568 358 A1

## Description

### CROSS-REFERENCE TO RELATED APPLICATION

This application claims priority to Chinese patent application No. 202210929174.0, filed with the China National Intellectual Property Administration on August 3, 2022 and entitled "METHOD FOR DETERMINING INFORMATION OF WAKE-UP SIGNAL, TERMINAL, AND NETWORK SIDE DEVICE", which is incorporated herein by reference in its entirety.

### TECHNICAL FIELD

This application pertains to the field of wireless communication technologies, and in particular, relates to a method for determining information of a wake-up signal, a terminal, and a network side device.

### BACKGROUND

In a new radio (New Radio, NR) system, to further improve power saving performance of a user equipment (User Equipment, UE), a wake-up signal (Wake Up Signal, WUS) based on a physical downlink control channel (Physical downlink control channel, PDCCH) is introduced. The WUS functions to inform the UE about whether the UE needs to monitor the PDCCH during specific discontinuous reception (Discontinuous Reception, DRX) duration (onDuration). The UE determines whether to start an onDuration timer and perform PDCCH monitoring in a next DRX cycle based on the indication. When there is no data, the UE may not need to monitor the PDCCH during onDuration, which is equivalent to that the UE may be in a sleep state during an entire long cycle (Long cycle) of DRX, thereby further saving power.

A network side device (for example, a base station) may enter some energy saving modes for a purpose of energy saving. For example, part or all of uplink transmission and/or downlink transmission of the base station may be disenabled, and the base station may continuously monitor a wake-up signal (WUS) from a terminal UE or another device. When receiving the wake-up signal, the base station in an energy saving mode may switch to another base station operating state. For example, the base station is fully started or is switched to a shallow energy saving operating mode.

When transmitting the WUS, the UE needs to determine a power reference source and/or transmission power for transmitting the WUS. However, in related technologies, there is no technical solution on how to determine a power reference source and/or transmission power for transmitting a WUS by a UE. Therefore, the UE cannot determine the power reference source and/or the transmission power for transmitting the WUS when needing to transmit the WUS.

### SUMMARY

Embodiments of this application provide a method for determining information of a wake-up signal, a terminal, and a network side device, to solve a problem that a UE cannot determine a power reference source and/or transmission power for transmitting a WUS.

According to a first aspect, a method for determining information of a wake-up signal is provided, including: a terminal obtains at least one piece of WUS configuration information; and the terminal determines at least one of the following based on the at least one piece of WUS configuration information: a target power reference source for transmitting an uplink wake-up signal; and transmission power of the uplink wake-up signal.

According to a second aspect, an apparatus for determining information of a wake-up signal is provided, including: a first obtaining module, configured to obtain at least one piece of WUS configuration information; and a determining module, configured to determine at least one of the following based on the at least one piece of WUS configuration information: a target power reference source for transmitting an uplink wake-up signal; and transmission power of the uplink wake-up signal.

According to a third aspect, a method for configuring a wake-up signal is provided, including: a network side device obtains at least one piece of WUS configuration information of a terminal, where the WUS configuration information is used for determining a power reference source for the terminal to transmit an uplink WUS and/or transmission power of the uplink WUS; and the network side device transmits the at least one piece of WUS configuration information to the terminal.

According to a fourth aspect, an apparatus for configuring a wake-up signal is provided, including: a second obtaining module, configured to obtain at least one piece of WUS configuration information of a terminal, where the WUS configuration information is used for determining a power reference source for the terminal to transmit an uplink WUS and/or transmission power of the uplink WUS; and a transmit module, configured to transmit the at least one piece of WUS configuration information to the terminal.

According to a fifth aspect, a terminal is provided. The terminal includes a processor and a memory. The memory stores a program or instructions runnable on the processor, and the program or instructions, when executed by the processor, implement the steps of the method according to the first aspect.

According to a sixth aspect, a terminal is provided, including a processor and a communication interface, where the processor is configured to implement the steps of the method according to the first aspect, and the communication interface is configured to communicate with an external device.

According to a seventh aspect, a network side device is provided. The network side device includes a processor and a memory. The memory stores a program or instructions runnable on the processor, and the program or instructions, when executed by the processor, implement the steps of the method according to the third aspect.

According to an eighth aspect, a network side device is provided, including a processor and a communication interface, where the processor is configured to implement the steps of the method according to the third aspect, and the communication interface is configured to communicate with an external device.

According to a ninth aspect, a system for determining information of a wake-up signal is provided, including: a terminal and a network side device. The terminal may be configured to perform the steps of the method according to the first aspect. The network side device may be configured to perform the steps of the method according to the third aspect.

According to a tenth aspect, a readable storage medium is provided. The readable storage medium stores a program or instructions. The program or instructions, when executed by a processor, implement the steps of the method according to the first aspect, or the steps of the method according to the third aspect.

According to an eleventh aspect, a chip is provided. The chip includes a processor and a communication interface. The communication interface is coupled to the processor. The processor is configured to run a program or instructions to implement the steps of the method according to the first aspect, or implement the steps of the method according to the third aspect.

According to a twelfth aspect, a computer program/program product is provided. The computer program/program product is stored in a storage medium. The computer program/program product is executed by at least one processor to implement the steps of the method according to the first aspect, or implement the steps of the method according to the third aspect.

In the embodiments of this application, a terminal obtains at least one piece of WUS configuration information, and determines a target power reference source for transmitting an uplink WUS and/or transmission power of the uplink wake-up signal based on the at least one piece of WUS configuration information, so that when the uplink WUS needs to be transmitted, the power reference source for transmitting the uplink WUS and/or the transmission power of the uplink wake-up signal can be determined, and then the uplink WUS can be transmitted.

## BRIEF DESCRIPTION OF THE DRAWINGS

FIG. 1 is a block diagram of a wireless communication system to which an embodiment of this application is applicable;

FIG. 2 is a schematic flowchart of a method for determining information of a wake-up signal according to an embodiment of this application;

FIG. 3 is another schematic flowchart of a method for determining information of a wake-up signal according to an embodiment of this application;

FIG. 4 is a schematic diagram of determining of initial transmission power of an uplink WUS according to an embodiment of this application;

FIG. 5 is another schematic flowchart of a method for determining information of a wake-up signal according to an embodiment of this application;

FIG. 6 is a schematic flowchart of a method for configuring a wake-up signal according to an embodiment of this application;

FIG. 7 is a schematic diagram of a structure of an apparatus for determining information of a wake-up signal according to an embodiment of this application;

FIG. 8 is a schematic diagram of a structure of an apparatus for configuring a wake-up signal according to an embodiment of this application;

FIG. 9 is a schematic diagram of a structure of a communication device according to an embodiment of this application;

FIG. 10 is a schematic diagram of a hardware structure of a terminal according to an embodiment of this application; and

FIG. 11 is a schematic diagram of a hardware structure of a network side device according to an embodiment of this application.

**DETAILED DESCRIPTION**

The technical solutions in embodiments of this application are clearly described below with reference to the accompanying drawings in the embodiments of this application. Clearly, the described embodiments are some rather than all of the embodiments of this application. Based on the embodiments of this application, all other embodiments obtained by a person of ordinary skill in the art fall within the protection scope of this application.

The terms such as "first" and "second" in the specification and claims of this application are intended to distinguish between similar objects, but are not intended to describe a specific sequence or order. It should be understood that the terms used in such a way may be interchanged under appropriate circumstances so that the embodiments of this application can be implemented in an order other than those illustrated or described herein, the objects distinguished by "first" and "second" are usually of one type, and a quantity of objects is not limited. For example, one or more first objects may be provided. In addition, "and/or" in the specification and the claims indicates at least one of connected objects, and the character "/" generally indicates an "or" relationship between associated objects.

It should be noted that the technologies described in the embodiments of this application are not limited to a long term evolution (Long Term Evolution, LTE)/LTE-advanced (LTE-Advanced, LTE-A) system, and may be also applied to other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single carrier-frequency division multiple access (Single-carrier Frequency Division Multiple Access, SC-FDMA), and other systems. The terms "system" and "network" in the embodiments of this application are often used interchangeably, and the described technology can be applied to the systems and radio technologies mentioned above, and can be also applied to other systems and radio technologies. The following description describes a new radio (New Radio, NR) system for example purposes, and NR terms are used in most of the following descriptions, but these technologies can be also applied to applications other than NR system applications, such as 6th generation (6th Generation, 6G) communication systems.

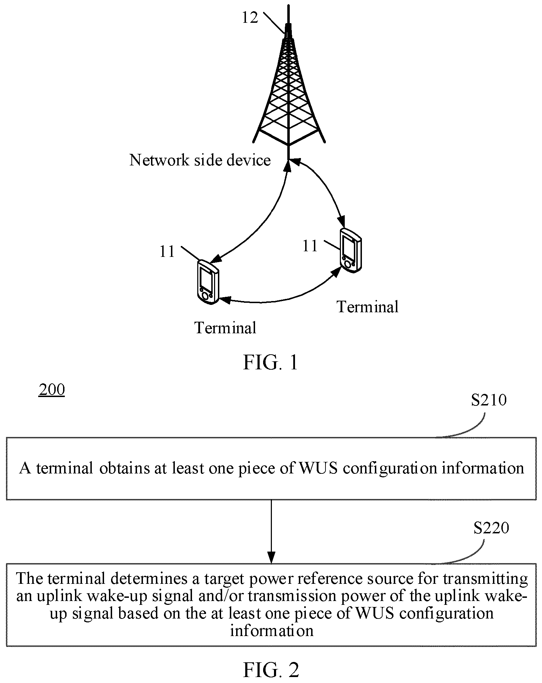

FIG. 1 is a block diagram of a wireless communication system to which an embodiment of this application is applicable. The wireless communication system includes a terminal 11 and a network side device 12. The terminal 11 may be a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), a smart home (a household device with a wireless communication function, such as a refrigerator, a television, a washing machine or furniture), a game console, a personal computer (personal computer, PC), an automated teller machine or a self-service machine or other terminal-side devices. The wearable device includes a smartwatch, a smart band, a smart headset, smart glasses, smart j ewelry (a smart bracelet, a smart chain bracelet, a smart ring, a smart necklace, a smart anklet, a smart ankle chain, or the like), a smart wrist strap, a smart garment, or the like. It should be noted that, a specific type of the terminal 11 is not limited in the embodiment of this application. The network side device 12 may include an access network device and/or a core network device, where the access network device 12 may also be referred to as a radio access network device, a radio access network (Radio Access Network, RAN), a radio access network function, or a radio access network unit. The access network device 12 may include a base station, a wireless local area network (Wireless Local Area Network, WLAN) access point or a WiFi node, or the like. The base station may be referred to as a Node B, an evolved Node B (evolved Node B, eNB), an access point, a base transceiver station (Base Transceiver Station, BTS), a radio base station, a radio transceiver, a basic service set (Basic Service Set, BSS), an extended service set (Extended Service Set, ESS), a home Node B, a home evolved Node B, a transmitting receiving point (Transmitting Receiving Point, TRP) or some other appropriate term in the field. As long as the same technical effect is achieved, the base station is not limited to a specific technical vocabulary. It should be noted that in the embodiment of this application, only a base station in an NR system is described as an example, and a specific type of the base station is not limited.

A solution for determining information of a wake-up signal according to an embodiment of this application is described in detail below through some embodiments and application scenarios thereof with reference to the accompanying drawings.

FIG. 2 is a schematic flowchart of a method for determining information of a wake-up signal according to an embodiment of this application. The method 200 may be performed by a terminal. In other words, the method may be performed by software or hardware installed on the terminal. As shown in FIG. 2, the method may include the following steps.

S210: the terminal obtains at least one piece of WUS configuration information.

In the embodiment of this application, the terminal may receive the at least one piece of WUS configuration information from a network side device. For example, the network side device configures the at least one piece of WUS configuration information for the terminal through configuration signaling.

Alternatively, the terminal may obtain the at least one piece of WUS configuration information based on a manner agreed on in a protocol. For example, the protocol may agree on WUS configuration information for a terminal located in a type of cell, and the terminal may obtain corresponding WUS configuration information based on the type of the cell in which the terminal is currently located.

S220: the terminal determines a target power reference source for transmitting an uplink wake-up signal and/or transmission power of the uplink wake-up signal based on the at least one piece of WUS configuration information.

In the embodiment of this application, the target power reference source refers to a source of a reference signal that the terminal refers to when determining the transmission power of the uplink WUS. For example, the terminal may refer to a reference signal of the target power reference source to determine the transmission power of the uplink WUS. For example, the terminal may determine the transmission power of the uplink WUS based on transmission power and/or received power, and the like of the reference signal of the target power reference source. The target power reference source may be a serving cell of the terminal or an energy-saving cell.

In the technical solution provided in the embodiment of this application, the terminal obtains at least one piece of WUS configuration information, and determines a target power reference source for transmitting an uplink WUS and/or transmission power of the uplink wake-up signal based on the at least one piece of WUS configuration information, so that when the uplink WUS needs to be transmitted, the power reference source for transmitting the uplink WUS and/or the transmission power of the uplink wake-up signal can be determined, and then the uplink WUS is transmitted. The energy-saving cell is waken up by transmitting the uplink WUS, thereby reducing power consumption of the network side device.

In a possible implementation of the embodiment of this application, the WUS configuration information may include, but is not limited to, at least one of the following.

(1) Power reference source information for indicating a power reference source for determining the uplink wake-up signal. The terminal can determine the power reference source for transmitting the WUS through the power reference source information.

Optionally, the power reference source information may be a default reference source. For example, by default, the power reference source may be a serving cell, an energy-saving cell, a correlated cell of an energy-saving cell, a global navigation satellite system (Global Navigation Satellite System, GNSS) (such as a global positioning system (Global Positioning System, GPS)), another UE, or no reference source, which may be determined based on an actual application.

(2) Priority information of the power reference source. The priority information is used for indicating a priority of a corresponding power reference source. When the terminal has a plurality of available power reference sources, the terminal may determine a power reference source to be used based on a priority of each power reference source.

Optionally, a priority of a power reference source corresponding to a serving cell or an energy-saving cell may be a default value. For example, the priority of the power reference source corresponding to the serving cell or the energy-saving cell may be pre-agreed on.

(3) A first threshold for indicating that the target power reference source for transmitting the uplink wake-up signal is adjusted in a case that received power of a reference signal of the target power reference source is lower than or equal to the first threshold. Through the first threshold, a UE may be indicated to adjust the target power reference source for the WUS when received power (for example, reference signal received power (Reference Signal Received Power, RSRP)) of a power reference source currently used for transmitting the WUS is lower than or equal to the first threshold. For example, the power reference source used for transmitting the WUS is replaced with a power reference source with higher reference signal received power.

(4) A second threshold for indicating that the target power reference source for transmitting the uplink wake-up signal is adjusted in a case that received quality of the reference signal of the target power reference source is lower than or equal to the second threshold. Through the second threshold, the UE may be indicated to adjust the target power reference source for the WUS when received quality (for example, reference signal received quality (Reference Signal Received Quality, RSRQ)) of the power reference source currently used for transmitting the WUS is lower than or equal to the second threshold. For example, the power reference source used for transmitting the WUS is replaced with a power reference source with higher reference signal received quality.

(5) Second transmission power of a serving cell reference signal. Through the second transmission power of the serving cell reference signal, when the terminal takes a serving cell as a power reference source for transmitting the WUS, first transmission power for transmitting the WUS may be determined based on the second transmission power of the serving cell reference signal.

(6) A path loss between a serving cell and an energy-saving cell. Through the path loss between a serving cell and an energy-saving cell, when the terminal takes the serving cell as a power reference source for transmitting the WUS, the first transmission power for transmitting the WUS may be determined based on the path loss between the serving cell and the energy-saving cell.

(7) First target received power of the energy-saving cell for the wake-up signal. Through the first target received power of the energy-saving cell for the wake-up signal, before the terminal transmits the WUS, the first transmission power for transmitting the WUS may be determined based on the first target received power of the energy-saving cell for the wake-up signal.

(8) An initial power adjustment coefficient of the wake-up signal. Through the initial power adjustment coefficient of the wake-up signal, when determining the first transmission power for transmitting the WUS, the terminal can correct the determined first transmission power.

(9) Second target received power of the serving cell. Through the second target received power of the serving cell, when the terminal takes the serving cell as a power reference source for transmitting the WUS, the first transmission power for transmitting the WUS can be determined based on the second target received power of the serving cell.

(10) Maximum transmission power of the wake-up signal. Through the maximum transmission power of the wake-up signal, the terminal can control a maximum value of the first transmission power for transmitting the WUS, so that the first transmission power for the terminal to transmit the WUS does not exceed the maximum transmission power of the wake-up signal.

(11) A transmission power step of the wake-up signal. Through the transmission power step of the wake-up signal, when transmitting the WUS, the terminal can progressively increase the first transmission power for transmitting the WUS based on the transmission power step, to ensure that the network side device can receive the WUS transmitted by the terminal.

In the embodiment of this application, the terminal may determine the target power reference source of the uplink WUS based on one or more pieces of information included in the above WUS configuration information.

For example, in a case that the at least one piece of WUS configuration information includes one piece of power reference source information, the terminal determines that the target power reference source of the uplink WUS is a power reference source indicated by the power reference source information.

In a possible implementation, that the terminal determines a target power reference source for transmitting an uplink wake-up signal based on the at least one piece of WUS configuration information includes at least one of the following.

(1) The terminal determines a first power reference source among the plurality of power reference sources as the target power reference source, where a corresponding WUS configuration is configured for the first power reference source in the at least one piece of WUS configuration information.

For example, a corresponding WUS configuration is configured for the first power reference source in at least one piece of WUS configuration information configured for the terminal by the network side device or agreed on in a protocol. The WUS configuration may include one or more of time-frequency domain information of a WUS, a WUS cycle, a signal feature of the WUS, a maximum number of transmissions of the WUS, a valid area of the WUS, and other information.

For another example, a cell configuration configured by the network side device for the first power reference source includes the at least one piece of WUS configuration information.

For another example, a power reference source indicated in at least one piece of WUS configuration information configured by the network side device for the terminal or agreed on in a protocol includes the first power reference source, or cell information in the at least one piece of WUS configuration information configured by the network side device for the terminal or agreed on in a protocol is indicated as the first power reference source.

For example, a cell 1 is a serving cell of a UE, and WUS configuration information configured by the serving cell for the UE indicates that a cell 2 is a power reference source (that is, there is one piece of WUS configuration information indicating that the cell 2 is an optional power reference source, or in other words, a cell configuration (CellConfig) of the cell 2 includes WUS configuration information (CellConfig)). However, it is not configured that a cell 3 is a power reference source (that is, no WUS Configuration information indicates that the cell 3 is an optional power reference source, or in other words, CellConfig of the cell 3 does not include WUS Config). Therefore, when the UE detects a synchronization signal block (Synchronization Signal Block, SSB) of the cell 3, the UE cannot actually take the cell 3 as a power reference source or adjust the WUS transmission power by using the SSB of the cell 3. This is because the cell 3 may be a simple cell normally operating, and has nothing to do with any energy-saving cell. That is, the cell 3 is not a correlated cell of an energy-saving cell.

(2) The terminal determines a power reference source with a highest priority among a plurality of power reference sources as the target power reference source, where the plurality of power reference sources are power reference sources corresponding to power reference source information in the at least one piece of WUS configuration information.

For example, a plurality of power reference sources and priorities thereof are configured in the at least one piece of WUS configuration information, and the plurality of power reference sources include a serving cell and an energy-saving cell. A priority of a power reference source of the energy-saving cell is higher than that of the serving cell, and the UE may take a power reference source with a highest priority (for example, the energy-saving cell) as the target power reference source.

(3) The terminal selects a second power reference source among the plurality of power reference sources as the target power reference source, where the terminal can detect a measurement reference signal transmitted by the second power reference source.

That is, the terminal uses the second power reference source that can detect the measurement reference signal transmitted by the second power reference source as the target power reference source. With this possible implementation, the terminal can determine power for transmitting the WUS based on a result of measurement of the measurement reference signal transmitted by the second power reference source.

In this possible implementation, the measurement reference signal includes, but is not limited to, an SSB, a channel state information (Channel state information, CSI) reference signal (Reference Signal, RS), or a dedicated RS.

(4) The terminal selects the target power reference source from the plurality of power reference sources based on a terminal implementation.

That is, the target power reference source may be determined by the terminal implementation. For example, the terminal may select the target power reference source from the plurality of power reference sources based on local settings or a local policy.

(5) The terminal selects a third power reference source among the plurality of power reference sources as the target power reference source, where the third power reference source is a power reference source with a maximum reference signal strength or a power reference source with highest reference signal quality.

The terminal may determine the target power reference source by using one of (1) to (5) above, or may combine two or three or all of the above to determine the target power reference source.

For example, the network side device configures a plurality of WUS power reference sources and priorities thereof for the UE, and the power reference sources include a serving cell and an energy-saving cell. A priority of a power reference source of the energy-saving cell is higher than that of the serving cell. If the UE can detect both an SSB/RS from the serving cell and an SSB/RS from the energy-saving cell when preparing to transmit the WUS, the UE may use a power reference source with a highest priority, that is, the energy-saving cell, as a WUS power reference source. If the UE can only detect the SSB/RS of the serving cell, even if the WUS power reference source priority of the energy-saving cell is higher than that of the serving cell, the UE cannot use the energy-saving cell as the WUS power reference source. In this case, only the serving cell can be used as the WUS power reference source. It can be seen that this example combines the implementations in (1) to (3) above.

For another example, the network side device configures the energy-saving cell only for the UE as the power reference source for the UE to transmit the WUS. If the UE can only detect the SSB/RS from the serving cell when preparing to transmit the WUS, the UE cannot use the energy-saving cell as the WUS power reference source. In this case, if the network side device configures default initial power for transmitting the WUS for the UE, the UE can determine, based on an implementation, whether to use the default initial power to transmit the WUS or to wait for reception of the SSB/RS from the energy-saving cell by the UE before determining the power for transmitting the WUS. It can be seen that this example combines (1), (3), and (4) above.

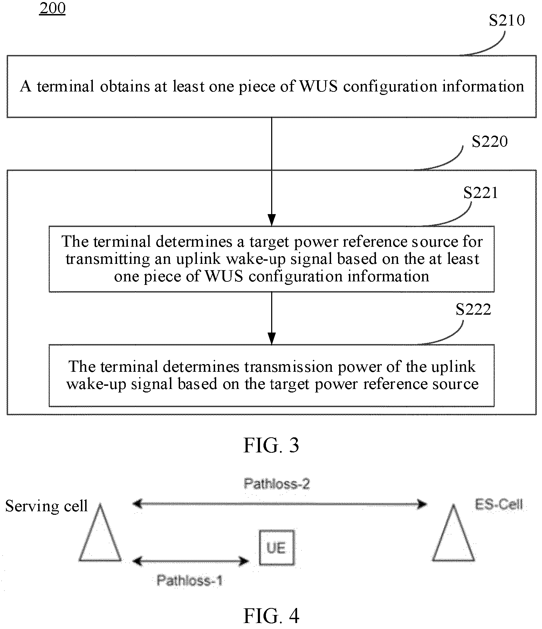

In a possible implementation, as shown in FIG. 3, step S220 may include steps S221 and S222. That is, after determining a target power reference source for transmitting an uplink wake-up signal, the terminal may determine transmission power of the uplink wake-up signal based on the target power reference source.

For example, the terminal may determine transmission power of the uplink WUS based on received power obtained by measuring a reference signal transmitted by the target power reference source.

Alternatively, in another possible implementation, the terminal may directly take a serving cell as the target power reference source of the uplink WUS, and determine transmission power of the uplink WUS based on first WUS configuration information.

Optionally, the terminal may determine initial transmission power of the uplink WUS based on one of the following manners.

$$(1)\ P_{tx-init} = \breve{P}_{target-ES} + P_{pathloss-2} + P_{rx} - P_{tx},$$

where $P_{target-ES}$ is first target received power of an energy-saving cell for the wake-up signal, $P_{pathloss-2}$ is a path loss between a serving cell and the energy-saving cell, $P_{tx}$ is second transmission power of a serving cell reference signal, $P_{rx}$ is received power obtained by measuring the reference signal of the serving cell by the terminal, and $P_{tx-init}$ is initial transmission power of the uplink WUS.

In this possible implementation, the second transmission power $P_{tx}$ of the serving cell reference signal, the first target received power $P_{target-ES}$ of the energy-saving cell for the wake-up signal, and the path loss $P_{pathloss-2}$ between the serving cell and the energy-saving cell may be determined in a manner of reception by the terminal from the network side device or agreement in a protocol. For example, these parameters may be included in WUS configuration information.

The serving cell transmits a measurement reference signal, such as an SSB, a CSI-RS or a dedicated RS, to the terminal, and the terminal obtains received power $P_{rx}$ by measuring the measurement reference signal transmitted by the serving cell, so that the path loss from the serving cell to the UE can be obtained as follows:

$$P_{pathloss-1} = P_{tx} - P_{rx}$$

If the serving cell configures the radio path loss $P_{pathloss-2}$ between the serving cell and the energy-saving cell, the first target received power $P_{target-ES}$ of the energy-saving cell for the WUS and the transmission power $P_{tx}$ of the serving cell reference signal to the UE, the initial power $P_{tx-init}$ for the UE to transmit the WUS is:

$$P_{tx-init} = P_{target-ES} + \left(P_{pathloss-2} - P_{pathloss-1}\right) = P_{target-ES} + P_{pathloss-2} + P_{rx} - P_{tx}$$

Through this possible implementation, the initial power for transmitting the uplink WUS can be determined based on the second transmission power of the serving cell reference signal, the first target received power of the energy-saving cell for the wake-up signal, and the received power obtained by measuring the measurement reference signal of the serving cell by the terminal, to ensure that the uplink WUS transmitted by the terminal can be received by the energy-saving cell

$$(2)\ P_{tx-init} = P_{target-ES} + P_{pathloss-2} + P_{rx} - P_{tx} + P_\Delta ,$$

where $P_\Delta$ is an initial power adjustment coefficient of the wake-up signal.

In this possible implementation, the UE determines the following parameter in a manner of reception from the network side device or agreement in a protocol:

initial power adjustment coefficient $P_\Delta$ of the WUS.

On the basis of (1) above, if the UE considers the power adjustment coefficient, the initial power $P_{tx-init}$ for the UE to transmit the uplink WUS is:

$$P_{tx-init} = P_{target-ES} + P_{pathloss-2} + P_{rx} - P_{tx} + P_\Delta .$$

Through this possible implementation, the initial transmission power determined in the implementation (1) can be corrected to further enable the WUS transmitted by the terminal at this initial transmission power to be received by the energy-saving cell.

For the implementations (1) and (2) above, optionally, if $P_{pathloss-1} > P_{pathloss-2}$, the UE does not use the serving cell as the power reference source of the WUS. That is, in a case that the path loss from the serving cell to the UE is greater than the path loss between the serving cell and the energy-saving cell, the serving cell is not appropriate as the target power reference source of the uplink WUS. Therefore, the UE does not use the serving cell as the power reference source of the WUS.

$$(3)\ P_{tx-init} = P_{target-Serv} + P_{tx} - P_{rx} ,$$

where $P_{target-Serv}$ is target received power of the serving cell.

In this possible implementation, the UE determines the following parameters in a manner of reception from the network side device or agreement in a protocol:

second transmission power $P_{tx}$ of a serving cell reference signal; and
second target received power $P_{target-Serv}$ of the serving cell.

For example, the above WUS configuration information may include the above parameters.

The serving cell transmits a measurement reference signal, such as an SSB, a CSI-RS or a dedicated RS, to the terminal. Power $P_{tx}$ of the measurement reference signal is agreed on in a protocol or the network side device informs the UE about the power through WUS configuration information. When the UE measures the received measurement reference signal to determine that the received power is $P_{rx}$, the path loss from the serving cell to the UE is:

$$P_{pathloss-1} = P_{tx} - P_{rx};$$

and the initial power $P_{tx\text{-}init}$ for the UE to transmit the WUS is:

$$P_{tx-init} = P_{target-Serv} + P_{pathloss-1} = P_{target-Serv} + P_{tx} - P_{rx}.$$

Through this possible implementation, the initial transmission power for transmitting the WUS can be determined based on the second target received power of the serving cell and the transmission power of the serving cell reference signal, so that the WUS initially transmitted by the UE can be received by the energy-saving cell.

$$(4)\ P_{tx-init} = P_{target-Serv} + P_{tx} - P_{rx} + P_{\Delta}.$$

Through this possible implementation, the initial transmission power determined in the implementation (3) can be corrected to further enable the WUS transmitted by the terminal at this initial transmission power to be received by the energy-saving cell.

$$(5)\quad P'_{tx-init} = \min\left(P_{tx-wusMax}, P_{tx-init}\right),$$

where $P_{tx\text{-}wusMax}$ is maximum transmission power of the wake-up signal, and $P'_{tx-init}$ is finally determined initial transmission power of the uplink WUS.

On the basis of the implementations (1) to (4), the UE determines the following parameter in a manner of reception from the network side device or agreement in a protocol:

maximum transmission power $P_{tx\text{-}wusMax}$ of the WUS.

For example, the above WUS configuration information may include the maximum transmission power $P_{tx\text{-}wusMax}$ of the WUS.

The UE determines $P_{tx\text{-}init}$ through any one of the implementations (1) to (4) above. If the UE considers the maximum transmission power of the WUS, the initial transmission power $P_{tx\text{-}init}$ for the UE to transmit the uplink WUS is:

$$P'_{tx-init} = \min\left(P_{tx-wusMax}, P_{tx-init}\right)$$

Through this possible implementation, it can be ensured that the initial transmission power of the uplink WUS does not exceed the maximum transmission power of the WUS.

In a possible implementation, that the terminal determines transmission power of the uplink wake-up signal based on the at least one piece of WUS configuration information may further include: the terminal may adjust the transmission power of the uplink wake-up signal based on a transmission power step of the wake-up signal after the determining the initial transmission power of the uplink wake-up signal, until the transmission power of the uplink wake-up signal reaches the maximum transmission power.

For example, the UE determines the following parameter in a manner of reception from the network side device or agreement in a protocol:

a transmission power step $P_{ramping}$ of the WUS.

When transmitting the uplink WUS for the first time, the UE transmits the uplink WUS at the initial transmission power $P_{tx\text{-}init}$ or $P'_{tx-init}$. If the UE still needs to transmit the uplink WUS subsequently, the UE may gradually increase the power by using the transmission power step $P_{ramping}$ of the WUS. For example, the power for transmitting the WUS for the second time becomes $P_{tx\text{-}init} + P_{ramping}$ or $P_{tx\text{-}init} + P_{ramping}$, and so on, until the power for the UE to transmit the WUS reaches the maximum transmission power of the WUS, or the UE stops transmitting the WUS.

Through the above possible implementation, by gradually increasing the transmission power for transmitting the uplink WUS through the transmission power step $P_{ramping}$, it can be further ensured that the energy-saving cell can receive the uplink WUS transmitted by the UE.

A theoretical principle of determining the initial transmission power of the uplink WUS in the implementation (1) above is shown in FIG. 4. If the UE is on a straight line connecting the serving cell (servingCell) to the energy-saving cell (Energy Saving-Cell, ES-Cell) in space, the UE can calculate a path loss $P_{pachloss-3}$ between the UE and the energy-saving cell (ES-Cell) as follows:

$$P_{pathloss-3} = P_{pathloss-2} - P_{pathloss-1}$$

$P_{pathloss-3}$ is a theoretical maximum path loss between the UE and the ES-Cell. That is, the initial power for the UE to transmit the uplink WUS, which is determined by using $P_{pathloss-3}$, is actually theoretical maximum power required for the UE to transmit the uplink WUS.

Specifically, if the UE is not on the straight line connecting the serving cell (servingCell) to the energy-saving cell (ES-Cell) in space, the path loss $P'_{pathloss-3}$ between the UE and the energy-saving cell (ES-Cell) that is calculated by the UE through $P_{pathloss-2} - P_{pathloss-1}$ is actually lower than $P_{pathloss-3}$. This may cause the initial transmission power of the WUS determined by the UE to be too small. The UE may be optimized through the implementation (2) above, or solve the problem of too small initial transmission power by gradually increasing the transmission power of the uplink WUS through the transmission power step of the wake-up signal.

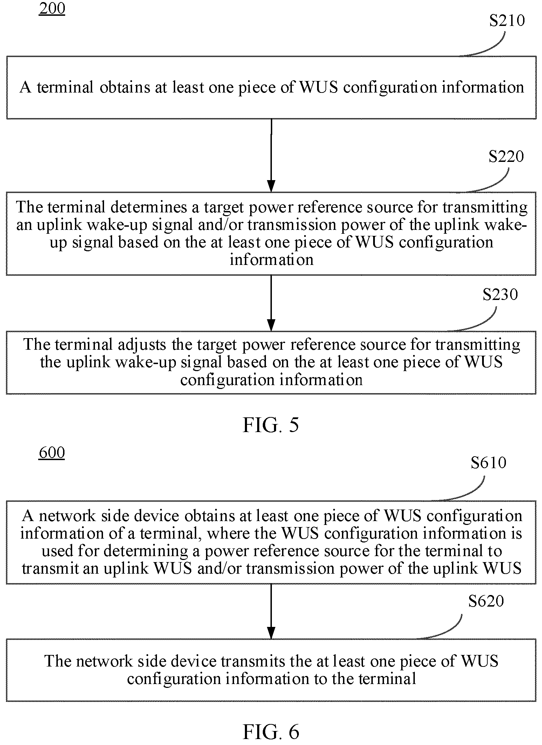

When needing to transmit the uplink WUS at the beginning, the terminal can determine the target power reference source of the WUS through each of the above possible implementations. However, during the movement of the terminal, the originally available WUS power reference source may become unavailable, and the WUS power reference source needs to be adjusted. For example, the original WUS power reference source of the UE is only the serving cell, but the UE gradually moves away from the serving cell and approaches the energy-saving cell during the movement. In this case, multiple changes may occur in the WUS power reference source. For example, both the serving cell and the energy-saving cell can be used as WUS power reference sources, only the energy-saving cell can be used as a WUS power reference source, or only a GNSS can be used as a WUS power reference source. Therefore, in a possible implementation, as shown in FIG. 5, after step S220, the method may further include the following steps.

S230: the terminal adjusts the target power reference source for transmitting the uplink wake-up signal based on the WUS configuration information.

In a possible implementation, step S230 may alternatively be performed after step S221 in FIG. 3 or after step S222 in FIG. 3. For example, when the UE transmits the uplink WUS based on a first WUS configuration (for example, the WUS configuration may include time-frequency domain information of the WUS, a WUS cycle, a signal feature of the WUS, a maximum number of transmissions of the WUS, and a valid area of the WUS), the UE may adjust the target power reference source of the uplink WUS, and then determine the transmission power of the uplink WUS based on an adjusted target power reference source.

In the above possible implementation, optionally, that the terminal adjusts the target power reference source for transmitting the uplink wake-up signal based on the at least one piece of WUS configuration information may include: the terminal adjusts the target power reference source for transmitting the uplink wake-up signal based on the at least one piece of WUS configuration information in a case that a triggering condition is met. That is, in this possible implementation, the terminal adjusts the target power reference source of the uplink WUS when a certain triggering condition is met.

Optionally, the triggering condition includes, but is not limited to, at least one of the following:

(1) the terminal is out of synchronization with the target power reference source. That is, when a state of synchronization between the terminal and the target power reference source of the current WUS becomes out of synchronization, the terminal may adjust the target power reference source of the WUS.

(2) received power obtained by measuring the reference signal of the target power reference source by the terminal is lower than or equal to the first threshold. In a case that the received power (for example, RSRP) obtained by measuring the reference signal of the target power reference source of the current WUS by the terminal is lower than or equal to the first threshold, a path loss between the terminal and the target power reference source of the current WUS is large, and the target power reference source of the WUS needs to be adjusted.

(3) received quality obtained by measuring the reference signal of the target power reference source by the terminal is lower than or equal to the second threshold. In a case that the received quality (for example, RSRQ) obtained by measuring the reference signal of the target power reference source of the current WUS by the terminal is lower than or equal to the second threshold, a path loss between the terminal and the target power reference source of the current WUS is large, and the terminal adjusts the target power reference source of the WUS.

(4) the terminal receives a reconfiguration message, where WUS configuration information in the reconfiguration message does not include the target power reference source. If WUS configuration information reconfigured in the reconfiguration message received by the terminal does not include the target power reference source of the current WUS, it indicates that the network side device does not recommend using of the target power reference source of the current WUS by the terminal, and the terminal adjusts the target power reference source of the WUS. The reconfiguration message may be a RRC reconfiguration message.

(5) the terminal receives a system message of the serving cell, where WUS configuration information in the system message does not include the target power reference source. If WUS configuration information configured in the system message received by the terminal does not include the target power reference source of the current WUS, it indicates that the network side device does not recommend using of the target power reference source of the current WUS by the terminal, and the terminal adjusts the target power reference source of the WUS.

(6) the terminal detects a measurement reference signal of a power reference source with a priority higher than that of the target power reference source. In a case that the UE detects an SSB or RS (such as CSI-RS or dedicated RS) of a power reference source with a higher priority, the UE may adjust the target power reference source of the current WUS, for example, to a power reference source with a higher priority.

(7) the terminal leaves a valid area of first WUS configuration information, where the first WUS configuration information is WUS configuration information including the target power reference source among the at least one piece of WUS configuration information. In a case that the UE leaves the valid area of the WUS configuration information corresponding to the target power reference source of the current WUS, the UE needs to adjust the target power reference source of the WUS to select a more appropriate power reference source to transmit the uplink WUS.

(8) a number of transmissions of uplink wake-up information by the terminal reaches a maximum number of transmissions of the wake-up signal determined by the first WUS configuration information. For example, the first WUS configuration information may include a WUS configuration, and the WUS configuration includes a maximum number of transmissions of the WUS. If a number of transmissions of the WUS by the terminal with a power reference source configured by the first WUS configuration information as the target power reference source of the WUS exceeds the maximum number of transmissions of the WUS, it indicates that it is not appropriate to use the power reference source as the target power reference source of the WUS and the power reference source cannot be successfully received by the energy-saving cell. Therefore, the terminal adjusts the target power reference source of the WUS.

In a possible implementation, similar to that the terminal determines the target power reference source of the uplink WUS, that the terminal adjusts the target power reference source for transmitting the uplink wake-up signal based on the at least one piece of WUS configuration information may include at least one of the following implementations:

(1) the terminal adjusts the target power reference source to a first power reference source, where the first power reference source is a power reference source configured with corresponding WUS configuration information;
(2) the terminal adjusts the target power reference source to a power reference source with a highest priority among the plurality of power reference sources;
(3) the terminal adjusts the target power reference source to a second power reference source among the plurality of power reference sources, where the terminal can detect a measurement reference signal transmitted by the second power reference source;
(4) the terminal adjusts the target power reference source based on a terminal implementation; and
(5) the terminal adjusts the target power reference source to a third power reference source among the plurality of power reference sources, where the third power reference source is a power reference source with a maximum reference signal strength or a power reference source with highest reference signal quality.

Similar to that the terminal determines the target power reference source of the uplink WUS, the terminal may adjust the target power reference source of the uplink WUS according to one of the above implementations, or may adjust the target power reference source of the uplink WUS according to a combination of at least one of the above implementations. For details, reference may be made to the above descriptions of the terminal determining the target power reference source of the uplink WUS. Details are not described herein.

Through the technical solution provided in the embodiment of this application, the terminal can determine transmission power of the uplink WUS for waking up the energy-saving cell, to ensure that the uplink WUS transmitted by the terminal can be detected by the energy-saving cell.

Based on the same technical concept of the embodiment of this application, an embodiment of this application further provides a method for configuring a wake-up signal. The method may be performed by a network side device. In other words, the method may be performed by software or hardware installed on the network side device. As shown in FIG. 6, the method 600 may include the following steps.

S610: a network side device obtains at least one piece of WUS configuration information of a terminal, where the WUS configuration information is used for determining a power reference source for the terminal to transmit an uplink WUS and/or transmission power of the uplink wake-up signal.

S620: the network side device transmits the at least one piece of WUS configuration information to the terminal.

The at least one piece of WUS configuration information is the same as the at least one piece of WUS configuration information in the method 200. For details, reference may be made to the related description in the method 200, and details are not described herein.

In a possible implementation, the WUS configuration information includes, but is not limited to, at least one of the following:

(1) power reference source information for indicating a power reference source for determining the uplink wake-up signal;
(2) priority information of the power reference source;

(3) a first threshold for indicating that the target power reference source for transmitting the uplink wake-up signal is adjusted in a case that received power of a reference signal of the target power reference source is lower than or equal to the first threshold;

(4) a second threshold for indicating that the target power reference source for transmitting the uplink wake-up signal is adjusted in a case that received quality of the reference signal of the target power reference source is lower than or equal to the second threshold;

(5) second transmission power of a serving cell reference signal;

(6) a path loss between a serving cell and an energy-saving cell;

(7) first target received power of the energy-saving cell for the wake-up signal;

(8) an initial power adjustment coefficient of the wake-up signal;

(9) second target received power of the serving cell;

(10) maximum transmission power of the wake-up signal; and

(11) a transmission power step of the wake-up signal.

Through the technical solution provided in the embodiment of this application, the network side device may configure, for the terminal, the at least one piece of WUS configuration information for determining transmission power for transmitting the uplink WUS, so that the terminal can determine the transmission power for transmitting the uplink WUS for waking up the energy-saving cell.

An execution body of the method for determining information of a wake-up signal according to the embodiment of this application may be an apparatus for determining information of a wake-up signal. The apparatus for determining information of a wake-up signal according to an embodiment of this application is described with an example in which the apparatus for determining information of a wake-up signal performs the method for determining information of a wake-up signal in the embodiment of this application.

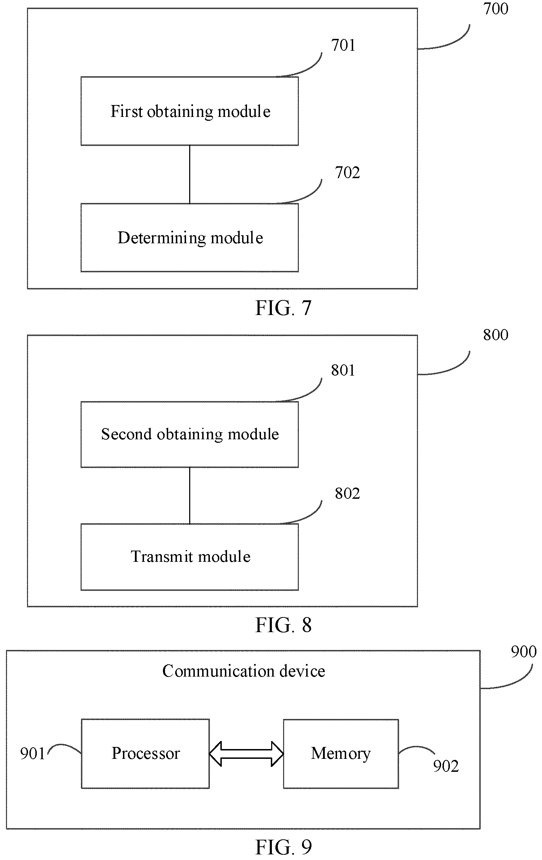

FIG. 7 is a schematic diagram of a structure of an apparatus for determining information of a wake-up signal according to an embodiment of this application. As shown in FIG. 7, the apparatus 700 mainly includes a first obtaining module 701 and a determining module 702.

In the embodiment of this application, the first obtaining module 701 is configured to obtain at least one piece of wake-up signal WUS configuration information; and the determining module 702 is configured to determine at least one of the following based on the at least one piece of WUS configuration information: a target power reference source for transmitting an uplink wake-up signal; and transmission power of the uplink wake-up signal.

In a possible implementation, the WUS configuration information includes at least one of the following:

power reference source information for indicating a power reference source for determining the uplink wake-up signal;

priority information of the power reference source;

a first threshold for indicating that the target power reference source for transmitting the uplink wake-up signal is adjusted in a case that received power of a reference signal of the target power reference source is lower than or equal to the first threshold;

a second threshold for indicating that the target power reference source for transmitting the uplink wake-up signal is adjusted in a case that received quality of the reference signal of the target power reference source is lower than or equal to the second threshold;

second transmission power of a serving cell reference signal;

a path loss between a serving cell and an energy-saving cell;

first target received power of the energy-saving cell for the wake-up signal;

an initial power adjustment coefficient of the wake-up signal;

second target received power of the serving cell;

maximum transmission power of the wake-up signal; and

a transmission power step of the wake-up signal.

In a possible implementation, that the determining module 702 is configured to determine a target power reference source for transmitting an uplink wake-up signal based on the at least one piece of WUS configuration information includes at least one of the following:

the determining module is configured to determine a first power reference source as the target power reference source, where the first power reference source is a power reference source configured with corresponding WUS configuration information;

the determining module is configured to determine a power reference source with a highest priority among a plurality of power reference sources as the target power reference source, where the plurality of power reference sources are power reference sources corresponding to power reference source information in the at least one piece of WUS configuration information;

the determining module is configured to select a second power reference source among the plurality of power reference sources as the target power reference source, where the terminal can detect a measurement reference signal transmitted by the second power reference source;

the determining module is configured to select the target power reference source from the plurality of power reference sources based on a terminal implementation; and

the determining module is configured to select a third power reference source among the plurality of power reference sources as the target power reference source, where the third power reference source is a power reference source with a maximum reference signal strength or a power reference source with highest reference signal quality.

In a possible implementation, the determining module 702 is further configured to adjust the target power reference source for transmitting the uplink wake-up signal based on the at least one piece of WUS configuration information.

In a possible implementation, that the determining module 702 is further configured to adjust the target power reference source for transmitting the uplink wake-up signal based on the at least one piece of WUS configuration information includes:

the determining module is configured to adjust the target power reference source for transmitting the uplink wake-up signal based on the at least one piece of WUS configuration information in a case that a triggering condition is met.

In a possible implementation, the triggering condition includes at least one of the following:

out-of-synchronization with the target power reference source occurs;

received power obtained by measuring the reference signal of the target power reference source is lower than or equal to the first threshold;

received quality obtained by measuring the reference signal of the target power reference source is lower than or equal to the second threshold;

a reconfiguration message is received, where WUS configuration information in the reconfiguration message does not include the target power reference source;

a system message of the serving cell is received, where WUS configuration information in the system message does not include the target power reference source;

a measurement reference signal of a power reference source with a priority higher than that of the target power reference source is detected;

leaving a valid area of first WUS configuration information is performed, where the first WUS configuration information is WUS configuration information including the target power reference source among the at least one piece of WUS configuration information; and

a number of transmissions of uplink wake-up information reaches a maximum number of transmissions of the wake-up signal determined by the first WUS configuration information.

In a possible implementation, that the determining module 702 is further configured to adjust the target power reference source for transmitting the uplink wake-up signal based on the at least one piece of WUS configuration information includes at least one of the following:

the determining module is configured to adjust the target power reference source to a first power reference source, where the first power reference source is a power reference source configured with WUS configuration information by a network side device among a plurality of power reference sources included in the at least one piece of WUS configuration information;

the determining module is configured to adjust the target power reference source to a power reference source with a highest priority among the plurality of power reference sources;

the determining module is configured to adjust the target power reference source to a second power reference source among the plurality of power reference sources, where the apparatus can detect a measurement reference signal transmitted by the second power reference source; and

the determining module is configured to adjust the target power reference source based on a terminal implementation; and

the determining module is configured to adjust the target power reference source to a third power reference source among the plurality of power reference sources, where the third power reference source is a power reference source with a maximum reference signal strength or a power reference source with highest reference signal quality.

In a possible implementation, that the determining module 702 is configured to determine transmission power for transmitting the uplink wake-up signal based on the at least one piece of WUS configuration information includes:

the determining module is configured to determine that initial transmission power for transmitting the uplink wake-up signal is one of the following:

$P_{tx\text{-}init} = P_{target\text{-}ES} + P_{pathloss\text{-}2} + P_{rx} - P_{tx}$, where $P_{target\text{-}ES}$ is first target received power of an energy-saving cell for the wake-up signal, $P_{pathloss\text{-}2}$ is a path loss between a serving cell and the energy-saving cell, $P_{tx}$ is second transmission power of a serving cell reference signal, and $P_{rx}$ is received power obtained by measuring the reference signal of the serving cell by the terminal;

$P_{tx\text{-}init} = P_{target\text{-}ES} + P_{pathloss\text{-}2} + P_{rx} - P_{tx} + P_{\Delta}$, where $P_{\Delta}$ is an initial power adjustment coefficient of the wake-up signal;

$P_{tx\text{-}init} = P_{target\text{-}Serv} + P_{tx} - P_{rx}$, where $P_{target\text{-}Serv}$ is target received power of the serving cell;

$$P_{tx-init} = P_{target-Serv} + P_{tx} - P_{rx} + P_{\Delta};$$

and $P'_{tx-init} = \min(P_{tx-wusMax}, P_{tx-init})$, where $P_{tx\text{-}wusMax}$ is maximum transmission power of the wake-up signal.

In a possible implementation, that the determining module 702 is configured to determine first transmission power for transmitting the uplink wake-up signal based on the at least one piece of WUS configuration information further includes:

the determining module is configured to adjust the transmission power of the uplink wake-up signal based on a transmission power step of the wake-up signal after the determining the initial transmission power for transmitting the uplink wake-up signal, until the transmission power of the uplink wake-up signal reaches the maximum transmission power.

In a possible implementation, that the determining module 702 is configured to determine transmission power of the uplink wake-up signal based on the target power reference source further includes:

the determining module is configured to adjust the transmission power of the uplink wake-up signal based on a transmission power step of the wake-up signal after the determining the initial transmission power for transmitting the uplink wake-up signal, until the transmission power of the uplink wake-up signal reaches the maximum transmission power.

In a possible implementation, that the obtaining module 701 is configured to obtain at least one piece of WUS configuration information includes at least one of the following:

the obtaining module is configured to receive the at least one piece of WUS configuration information from the network side device; and

the obtaining module is configured to obtain the at least one piece of WUS configuration information based on a manner agreed on in a protocol.

The apparatus for determining information of a wake-up signal in the embodiment of this application may be an electronic device, such as an electronic device with an operating system, or a component such as an integrated circuit or a chip in the electronic device. The electronic device may be a terminal or another device other than the terminal. For example, the terminal may include, but is not limited to, the types of the terminal 11 listed above, and the another device may be a server, a network attached storage (Network Attached Storage, NAS), or the like, which is not specifically limited in the embodiment of this application.

The apparatus for determining information of a wake-up signal according to the embodiment of this application can implement each process implemented by the terminal in the method embodiments of FIG. 2 to FIG. 6, and achieve the same technical effect. To avoid repetition, details are not described herein.

FIG. 8 is a schematic diagram of a structure of an apparatus for configuring a wake-up signal according to an embodiment of this application. As shown in FIG. 8, the apparatus 800 mainly includes a second obtaining module 801 and a transmit module 802.

In the embodiment of this application, the second obtaining module 801 is configured to obtain at least one piece of WUS configuration information of a terminal, where the WUS configuration information is used for determining a power reference source for the terminal to transmit an uplink WUS and/or transmission power of the uplink wake-up signal; and the transmit module 802 is configured to transmit the at least one piece of WUS configuration information to the terminal.

The apparatus for configuring a wake-up signal according to the embodiment of this application can implement each process in the method embodiment of FIG. 6, and achieve the same technical effect. To avoid repetition, details are not described herein.

Optionally, as shown in FIG. 9, an embodiment of this application further provides a communication device 900, including a processor 901 and a memory 902. The memory 902 stores a program or instructions runnable on the processor 901. For example, when the communication device 900 is a terminal, the program or instructions, when executed by the processor 901, implement each step of the above-mentioned embodiment of the method for determining information of a wake-up signal, which can achieve the same technical effect. When the communication device 900 is a network side device, the program or instructions, when executed by the processor 901, implement each step of the above-mentioned embodiment of the method for configuring a wake-up signal, which can achieve the same technical effect. To avoid repetition, details are not described herein.

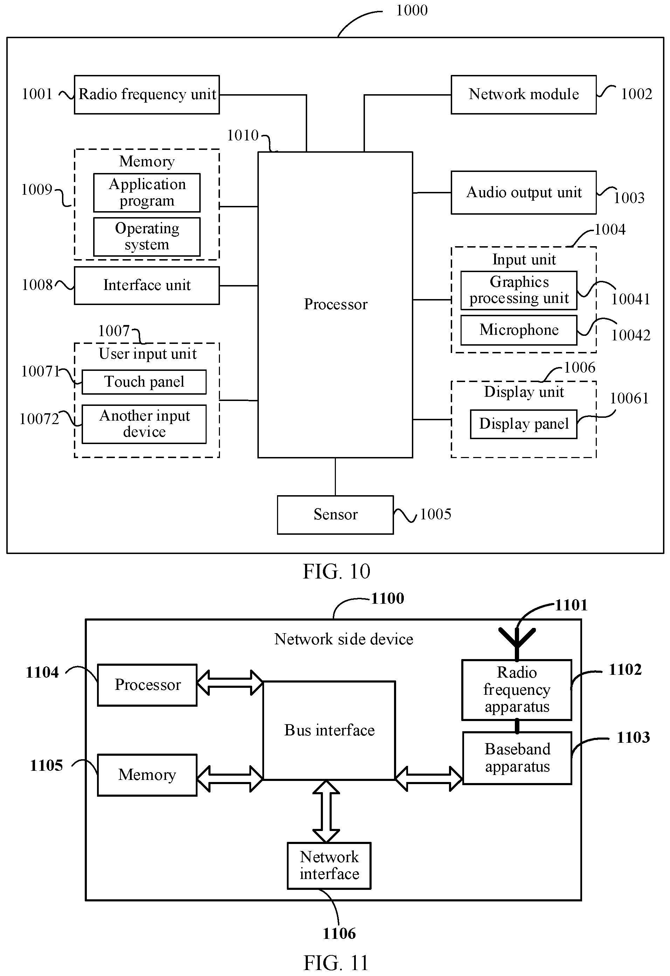

An embodiment of this application further provides a terminal, including a processor and a communication interface. The processor is configured to implement each step of the above-mentioned embodiment of the method for determining information of a wake-up signal, and the communication interface is configured to communicate with an external device. The terminal embodiment corresponds to the above-mentioned terminal side method embodiment, and each implementation process and implementation of the above-mentioned method embodiment can be applied to the terminal embodiment, which can achieve the same technical effect. Specifically, FIG. 10 is a schematic diagram of a hardware structure of a terminal according to an embodiment of this application.

The terminal 1000 includes, but is not limited to, at least some components of a radio frequency unit 1001, a network module 1002, an audio output unit 1003, an input unit 1004, a sensor 1005, a display unit 1006, a user input unit 1007, an interface unit 1008, a memory 1009, and a processor 1010.

It can be understood by a person skilled in the art that the terminal 1000 may further include a power supply (such as a battery) for supplying power to various components. The power supply may be logically connected to the processor 1010 by using a power management system, so as to achieve charging, discharging, power consumption management, and other functions by using the power management system. The terminal structure shown in FIG. 10 does not constitute a limitation on the terminal. The terminal may include more or fewer components than those shown, or combine some components, or have different component arrangements. Details are not described herein.

It should be understood that in the embodiment of this application, the input unit 1004 may include a graphics processing unit (Graphics Processing Unit, GPU) 10041 and a microphone 10042. The GPU 10041 processes image data of a still image or video that is obtained by an image acquisition apparatus (for example, a camera) in a video acquisition mode or an image acquisition mode. The display unit 1006 may include a display panel 10061, and the display panel 10061 may be configured in the form of a liquid crystal display, an organic light emitting diode, or the like. The user input unit 1007 includes at least one of a touch panel 10071 and another input device 10072. The touch panel 10071 is also referred to as a touchscreen. The touch panel 10071 may include two parts: a touch detection apparatus and a touch controller. The another input device 10072 may include, but is not limited to, a physical keyboard, a functional key (such as a volume control key or an on/off key), a track ball, a mouse, and a joystick, which is not described in detail herein.

In the embodiment of this application, after receiving downlink data from a network side device, the radio frequency unit 1001 may transmit the data to the processor 1010 for processing. In addition, the radio frequency unit 1001 may transmit uplink data to the network side device. Generally, the radio frequency unit 1001 includes, but is not limited to, an antenna, an amplifier, a transceiver, a coupler, a low noise amplifier, and a duplexer.

The memory 1009 may be configured to store a software program or instructions and various data. The memory 1009 may mainly include a first storage area for storing a program or instructions and a second storage area for storing data, where the first storage area may store an operating system, an application program or instructions required for at least one function (such as a sound playing function and an image playing function), and the like. In addition, the memory 1009 may include a volatile memory or a non-volatile memory, or the memory 1009 may include a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM) or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 1009 in the embodiment of this application includes, but is not limited to, these and any other suitable types of memories.

The processor 1010 may include one or more processing units. Optionally, the processor 1010 integrates an application processor and a modem processor, where the application processor mainly processes operations involving an operating system, a user interface, an application program, and the like, and the modem processor mainly processes wireless communication signals, such as a baseband processor. It can be understood that, the modem processor may not be integrated into the processor 1010.

The processor 1010 is configured to obtain at least one piece of wake-up signal WUS configuration information, and determine at least one of the following based on the at least one piece of WUS configuration information:

a target power reference source for transmitting an uplink wake-up signal; and

transmission power of the uplink wake-up signal.

An embodiment of this application further provides a network side device, including a processor and a communication interface. The processor is configured to implement each step of the above-mentioned embodiment of the method for configuring a wake-up signal, and the communication interface is configured to communicate with an external device. The network side device embodiment corresponds to the above-mentioned method embodiment for the network side device, and each implementation process and implementation of the above-mentioned method embodiment can be applied to the network side device embodiment, which can achieve the same technical effect.

Specifically, an embodiment of this application further provides a network side device. As shown in FIG. 11, the network side device 1100 includes: an antenna 1101, a radio frequency apparatus 1102, a baseband apparatus 1103, a processor 1104, and a memory 1105. The antenna 1101 is connected to the radio frequency apparatus 1102. In an uplink direction, the radio frequency apparatus 1102 receives information through the antenna 1101 and transmits the received information to the baseband apparatus 1103 for processing. In a downlink direction, the baseband apparatus 1103 processes information to be transmitted and transmits processed information to the radio frequency apparatus 1102. The radio frequency apparatus 1102 processes the received information and transmits processed information through the antenna 1101.

The method performed by the network side device in the above embodiment can be implemented in the baseband apparatus 1103. The baseband apparatus 1103 includes a baseband processor.

For example, the baseband apparatus 1103 may include at least one baseband board, and a plurality of chips are arranged on the baseband board. As shown in FIG. 11, one of the chips is, for example, a baseband processor, and is connected to the memory 1105 through a bus interface, so as to invoke a program in the memory 1105 to perform an operation of the network side device shown in the above method embodiment.

The network side device may further include a network interface 1106. The interface is, for example, a common public radio interface (common public radio interface, CPRI).

Specifically, the network side device 1100 according to the embodiment of this application further includes: instructions or a program that is stored in the memory 1105 and runnable on the processor 1104. The processor 1104 invokes the instructions or the program in the memory 1105 to perform the method performed by each module shown in FIG. 8, to achieve the same technical effect. To avoid repetition, details are not described herein.

An embodiment of this application further provides a readable storage medium. A program or instructions are stored on the readable storage medium. The program or instructions, when executed by a processor, implement each process of the above-mentioned embodiment of the method for determining information of a wake-up signal, or implement each process of the above-mentioned embodiment of the method for configuring a wake-up signal, which can achieve the same technical effect. To avoid repetition, details are not described herein.

The processor is the processor in the terminal in the above-mentioned embodiment. The readable storage medium includes a computer-readable storage medium, such as computer read-only memory ROM, a random access memory RAM, a magnetic disk, or a compact disc.

An embodiment of this application further provides a chip. The chip includes a processor and a communication interface. The communication interface is coupled to the processor, and the processor is configured to run a program or instructions to implement each process of the above-mentioned embodiment of the method for determining information of a wake-up signal, or implement each process of the above-mentioned embodiment of the method for configuring a wake-up signal, which can achieve the same technical effect. To avoid repetition, details are not described herein.

It should be understood that the chip mentioned in the embodiment of this application may also be referred to as a system on chip, a system chip, a chip system, a system-on-a-chip, or the like.

An embodiment of this application further provides a computer program/program product. The computer program/program product is stored on a storage medium. The computer program/program product is executed by at least one processor to implement each process of the above-mentioned embodiment of the method for determining information of a wake-up signal, or implement each process of the above-mentioned embodiment of the method for configuring a wake-up signal, which can achieve the same technical effect. To avoid repetition, details are not described herein.

An embodiment of this application further provides a system for determining information of a wake-up signal, including: a terminal and a network side device. The terminal may be configured to perform the steps of the method for determining information of a wake-up signal as described above. The network side device may be configured to perform the steps of the method for configuring a wake-up signal as described above.

It should be noted that, herein, terms "including", "comprising" or any other variants thereof are intended to cover non-exclusive inclusion, so that a process, method, article or apparatus including a series of elements includes not only those elements but also other elements not explicitly listed, or elements inherent to such a process, method, article or apparatus. Without further limitation, an element defined by the phrase "including a ..." does not exclude the presence of an additional identical element in the process, method, article or apparatus including the element. In addition, it should be noted that the scope of the method and apparatus in the implementations of this application is not limited to performing functions in the order shown or discussed, but also may include performing functions in a substantially simultaneous manner or in a reverse order based on the functions involved. For example, the described method may be performed in an order different from that described, and various steps may be further added, omitted or combined. In addition, features described with reference to some examples can be combined in other examples.

By the description of the above implementations, a person skilled in the art can clearly understand that the method in the above-mentioned embodiments may be implemented by software and a necessary general-purpose hardware platform, or certainly, by hardware, but the former is a better implementation in many cases. Based on this understanding, the technical solution of this application essentially, or a part contributing to the prior art, may be embodied in a form of a computer software product. The computer software product is stored on a storage medium (for example, a ROM/RAM, a magnetic disk, and a compact disc), and includes a plurality of instructions to cause a terminal (which may be a mobile phone, a computer, a server, an air-conditioner, a network device, or the like) to perform the method according to each embodiment of this application.

The embodiments of this application are described above with reference to the accompanying drawings, but this application is not limited to the specific implementations described above, and the specific implementations described above are merely illustrative and not restrictive. A person of ordinary skill in the art may further make many forms under the teaching of this application without departing from the purpose of this application and the protection scope of the claims, and these forms all fall within the protection scope of this application.

**Claims**

1. A method for determining information of a wake-up signal, comprising:

   obtaining, by a terminal, at least one piece of wake-up signal WUS configuration information; and
   determining, by the terminal, at least one of the following based on the at least one piece of WUS configuration information:

   a target power reference source for transmitting an uplink wake-up signal; and
   transmission power of the uplink wake-up signal.

2. The method according to claim 1, wherein the WUS configuration information comprises at least one of the following:

   power reference source information for indicating a power reference source for determining the uplink wake-up signal;
   priority information of the power reference source;
   a first threshold for indicating that the target power reference source for transmitting the uplink wake-up signal is adjusted in a case that received power of a reference signal of the target power reference source is lower than or equal to the first threshold;
   a second threshold for indicating that the target power reference source for transmitting the uplink wake-up signal is adjusted in a case that received quality of the reference signal of the target power reference source is lower than or equal to the second threshold;
   second transmission power of a serving cell reference signal;
   a path loss between a serving cell and an energy-saving cell;
   first target received power of the energy-saving cell for the wake-up signal;
   an initial power adjustment coefficient of the wake-up signal;
   second target received power of the serving cell;
   maximum transmission power of the wake-up signal; and
   a transmission power step of the wake-up signal.

3. The method according to claim 2, wherein the determining, by the terminal, the target power reference source for transmitting the uplink wake-up signal based on the at least one piece of WUS configuration information comprises at least one of the following:

   determining, by the terminal, a first power reference source as the target power reference source, wherein the first power reference source is a power reference source configured with corresponding WUS configuration information;
   determining, by the terminal, a power reference source with a highest priority among a plurality of power reference sources as the target power reference source, wherein the plurality of power reference sources are power reference sources corresponding to power reference source information in the at least one piece of WUS configuration information;

selecting, by the terminal, a second power reference source among the plurality of power reference sources as the target power reference source, wherein the terminal is capable of detecting a measurement reference signal transmitted by the second power reference source; and

selecting, by the terminal, a third power reference source among the plurality of power reference sources as the target power reference source, wherein the third power reference source is a power reference source with a maximum reference signal strength or a power reference source with highest reference signal quality.

4. The method according to claim 2, wherein the method further comprises:
adjusting, by the terminal, the target power reference source for transmitting the uplink wake-up signal based on the at least one piece of WUS configuration information.

5. The method according to claim 4, wherein the adjusting, by the terminal, the target power reference source for transmitting the uplink wake-up signal based on the at least one piece of WUS configuration information comprises:
adjusting, by the terminal, the target power reference source for transmitting the uplink wake-up signal based on the at least one piece of WUS configuration information in a case that a triggering condition is met.

6. The method according to claim 5, wherein the triggering condition comprises at least one of the following:

the terminal is out of synchronization with the target power reference source;

received power obtained by measuring the reference signal of the target power reference source by the terminal is lower than or equal to the first threshold;

received quality obtained by measuring the reference signal of the target power reference source by the terminal is lower than or equal to the second threshold;

the terminal receives a reconfiguration message, wherein WUS configuration information in the reconfiguration message does not comprise the target power reference source;

the terminal receives a system message of the serving cell, wherein WUS configuration information in the system message does not comprise the target power reference source;

the terminal detects a measurement reference signal of a power reference source with a priority higher than that of the target power reference source;

the terminal leaves a valid area of first WUS configuration information, wherein the first WUS configuration information is WUS configuration information comprising the target power reference source among the at least one piece of WUS configuration information; and

a number of transmissions of uplink wake-up information by the terminal reaches a maximum number of transmissions of the wake-up signal determined by the first WUS configuration information.

7. The method according to claim 4, wherein the adjusting, by the terminal, the target power reference source for transmitting the uplink wake-up signal based on the at least one piece of WUS configuration information comprises at least one of the following:

adjusting, by the terminal, the target power reference source to a first power reference source, wherein the first power reference source is a power reference source configured with WUS configuration information by a network side device among a plurality of power reference sources comprised in the at least one piece of WUS configuration information;

adjusting, by the terminal, the target power reference source to a power reference source with a highest priority among the plurality of power reference sources;

adjusting, by the terminal, the target power reference source to a second power reference source among the plurality of power reference sources, wherein the terminal is capable of detecting a measurement reference signal transmitted by the second power reference source; and

adjusting, by the terminal, the target power reference source to a third power reference source among the plurality of power reference sources, wherein the third power reference source is a power reference source with a maximum reference signal strength or a power reference source with highest reference signal quality.

8. The method according to claim 1, wherein the determining, by the terminal, the transmission power of the uplink wake-up signal based on the at least one piece of WUS configuration information comprises:
determining, by the terminal, that initial transmission power for transmitting the uplink wake-up signal is one of the

following:

$P_{tx\text{-}init} = P_{target\text{-}ES} + P_{pathloss\text{-}2} + P_{rx} - P_{tx}$, wherein $P_{target\text{-}ES}$ is first target received power of an energy-saving cell for the wake-up signal, $P_{pathloss\text{-}2}$ is a path loss between a serving cell and the energy-saving cell, $P_{tx}$ is second transmission power of a serving cell reference signal, and $P_{rx}$ is received power obtained by measuring a measurement reference signal of the serving cell by the terminal;

$P_{tx\text{-}init} = P_{target\text{-}ES} + P_{pathloss\text{-}2} + P_{rx} - P_{tx} + P_{\Delta}$, wherein $P_{\Delta}$ is an initial power adjustment coefficient of the wake-up signal;

$P_{tx\text{-}init} = P_{target\text{-}Serv} + P_{tx} - P_{rx}$, wherein $P_{target\text{-}Serv}$ is second target received power of the serving cell;

$$P_{tx-init} = P_{target-Serv} + P_{tx} - P_{rx} + P_{\Delta};$$

and

$$P'_{tx-init} = \min{}^{-}(P_{tx-wusMax}, P_{tx-init})$$, wherein $P_{tx\text{-}wusMax}$ is maximum transmission power of the wake-up signal.

9. The method according to claim 8, wherein the determining, by the terminal, the transmission power of the uplink wake-up signal based on the at least one piece of WUS configuration information further comprises:
adjusting, by the terminal, the transmission power of the uplink wake-up signal based on a transmission power step of the wake-up signal after the determining the initial transmission power for transmitting the uplink wake-up signal, until the transmission power of the uplink wake-up signal reaches the maximum transmission power.

10. The method according to any one of claims 1 to 9, wherein the obtaining, by the terminal, the at least one piece of WUS configuration information comprises at least one of the following:

receiving the at least one piece of WUS configuration information from the network side device; and
obtaining the at least one piece of WUS configuration information based on a manner agreed on in a protocol.

11. A method for configuring a wake-up signal, comprising:

obtaining, by a network side device, at least one piece of WUS configuration information of a terminal, wherein the WUS configuration information is used for determining a power reference source for the terminal to transmit an uplink WUS and/or transmission power of the uplink WUS; and
transmitting, by the network side device, the at least one piece of WUS configuration information to the terminal.

12. The method according to claim 11, wherein the WUS configuration information comprises at least one of the following:

power reference source information for indicating a power reference source for determining the uplink wake-up signal;
priority information of the power reference source;
a first threshold for indicating that the target power reference source for transmitting the uplink wake-up signal is adjusted in a case that received power of a reference signal of the target power reference source is lower than or equal to the first threshold;
a second threshold for indicating that the target power reference source for transmitting the uplink wake-up signal is adjusted in a case that received quality of the reference signal of the target power reference source is lower than or equal to the second threshold;
second transmission power of a serving cell reference signal;
a path loss between a serving cell and an energy-saving cell;
first target received power of the energy-saving cell for the wake-up signal;
an initial power adjustment coefficient of the wake-up signal;
second target received power of the serving cell;
maximum transmission power of the wake-up signal; and
a transmission power step of the wake-up signal.

13. An apparatus for determining information of a wake-up signal, comprising:

a first obtaining module, configured to obtain at least one piece of wake-up signal WUS configuration information;

and
a determining module, configured to determine at least one of the following based on the at least one piece of WUS configuration information:

a target power reference source for transmitting an uplink wake-up signal; and
transmission power of the uplink wake-up signal.

14. The apparatus according to claim 13, wherein that the determining module is configured to determine a target power reference source for transmitting an uplink wake-up signal based on the at least one piece of WUS configuration information comprises at least one of the following:

the determining module is configured to determine a first power reference source as the target power reference source, wherein the first power reference source is a power reference source configured with corresponding WUS configuration information;
the determining module is configured to determine a power reference source with a highest priority among a plurality of power reference sources as the target power reference source, wherein the plurality of power reference sources are power reference sources corresponding to power reference source information in the at least one piece of WUS configuration information;
the determining module is configured to select a second power reference source among the plurality of power reference sources as the target power reference source, wherein the second power reference source is a power reference source capable of detecting a measurement reference signal transmitted by the second power reference source; and
the determining module is configured to select a third power reference source among the plurality of power reference sources as the target power reference source, wherein the third power reference source is a power reference source with a maximum reference signal strength or a power reference source with highest reference signal quality.

15. The apparatus according to claim 13, wherein the determining module is further configured to adjust the target power reference source for transmitting the uplink wake-up signal based on the at least one piece of WUS configuration information.

16. The apparatus according to claim 15, wherein that the determining module is further configured to adjust the target power reference source for transmitting the uplink wake-up signal based on the at least one piece of WUS configuration information comprises:
the determining module is configured to adjust the target power reference source for transmitting the uplink wake-up signal based on the at least one piece of WUS configuration information in a case that a triggering condition is met.

17. The apparatus according to claim 15, wherein that the determining module is further configured to adjust the target power reference source for transmitting the uplink wake-up signal based on the at least one piece of WUS configuration information comprises at least one of the following:

the determining module is configured to adjust the target power reference source to a first power reference source, wherein the first power reference source is a power reference source configured with WUS configuration information by a network side device among a plurality of power reference sources comprised in the at least one piece of WUS configuration information;
the determining module is configured to adjust the target power reference source to a power reference source with a highest priority among the plurality of power reference sources;
the determining module is configured to adjust the target power reference source to a second power reference source among the plurality of power reference sources, wherein the apparatus is capable of detecting a measurement reference signal transmitted by the second power reference source; and
the determining module is configured to select a third power reference source among the plurality of power reference sources as the target power reference source, wherein the third power reference source is a power reference source with a maximum reference signal strength or a power reference source with highest reference signal quality.

18. The apparatus according to claim 13, wherein that the determining module is configured to determine transmission power of the uplink wake-up signal based on the at least one piece of WUS configuration information comprises:
the determining module is configured to determine that initial transmission power for transmitting the uplink wake-up signal is one of the following:

$P_{tx\text{-}init} = P_{target\text{-}ES} + P_{pathloss\text{-}2} + P_{rx} - P_{tx}$, wherein $P_{target\text{-}ES}$ is first target received power of an energy-saving cell for the wake-up signal, $P_{pathloss\text{-}2}$ is a path loss between a serving cell and the energy-saving cell, $P_{tx}$ is second transmission power of a serving cell reference signal, and $P_{rx}$ is received power obtained by measuring the reference signal of the serving cell;

$P_{tx\text{-}init} = P_{target\text{-}ES} + P_{pathloss\text{-}2} + P_{rx} - P_{tx} + P_{\Delta}$, wherein $P_{\Delta}$ is an initial power adjustment coefficient of the wake-up signal;

$P_{tx\text{-}init} = P_{target\text{-}Serv} + P_{tx} - P_{rx}$, wherein $P_{target\text{-}Serv}$ is target received power of the serving cell;

$$\breve{P}_{tx-init} = P_{target-Serv} + P_{tx} - P_{rx} + P_{\Delta};$$

and

$$P'_{tx-init} = \min(P_{tx-wusMax}, P_{tx-init})$$, wherein $P_{tx\text{-}wusMax}$ is maximum transmission power of the wake-up signal.

19. The apparatus according to claim 18, wherein that the determining module is configured to determine transmission power of the uplink wake-up signal based on the at least one piece of WUS configuration information further comprises:
the determining module is configured to adjust the transmission power of the uplink wake-up signal based on a transmission power step of the wake-up signal after the determining the initial transmission power of the uplink wake-up signal, until the transmission power of the uplink wake-up signal reaches the maximum transmission power.

20. The apparatus according to any one of claims 13 to 19, wherein that the obtaining module is configured to obtain at least one piece of WUS configuration information comprises at least one of the following:

the obtaining module is configured to receive the at least one piece of WUS configuration information from the network side device; and
the obtaining module is configured to obtain the at least one piece of WUS configuration information based on a manner agreed on in a protocol.

21. An apparatus for configuring a wake-up signal, comprising:

a second obtaining module, configured to obtain at least one piece of WUS configuration information of a terminal, wherein the WUS configuration information is used for determining a power reference source for the terminal to transmit an uplink WUS and/or transmission power of the uplink WUS; and
a transmit module, configured to transmit the at least one piece of WUS configuration information to the terminal.

22. A terminal, comprising a processor and a memory, wherein the memory stores a program or instructions runnable on the processor, and the program or instructions, when executed by the processor, implement the steps of the method for determining information of a wake-up signal according to any one of claims 1 to 10.

23. A network side device, comprising a processor and a memory, wherein the memory stores a program or instructions runnable on the processor, and the program or instructions, when executed by the processor, implement the steps of the method for configuring a wake-up signal according to either of claims 11 and 12.

24. A readable storage medium, wherein the readable storage medium stores a program or instructions, and the program or instructions, when executed by a processor, implement the steps of the method for determining information of a wake-up signal according to any one of claims 1 to 10, or the method for configuring a wake-up signal according to either of claims 11 and 12.

Network side device

11

Terminal

11

Terminal

FIG. 1

200

S210

A terminal obtains at least one piece of WUS configuration information

S220

The terminal determines a target power reference source for transmitting an uplink wake-up signal and/or transmission power of the uplink wake-up signal based on the at least one piece of WUS configuration information

FIG. 2

200

S210

A terminal obtains at least one piece of WUS configuration information

S220

S221

The terminal determines a target power reference source for transmitting an uplink wake-up signal based on the at least one piece of WUS configuration information

S222

The terminal determines transmission power of the uplink wake-up signal based on the target power reference source

FIG. 3

Pathloss-2

Serving cell

ES-Cell

UE

Pathloss-1

FIG. 4

200

S210

A terminal obtains at least one piece of WUS configuration information

S220

The terminal determines a target power reference source for transmitting an uplink wake-up signal and/or transmission power of the uplink wake-up signal based on the at least one piece of WUS configuration information

S230

The terminal adjusts the target power reference source for transmitting the uplink wake-up signal based on the at least one piece of WUS configuration information

FIG. 5

600

S610

A network side device obtains at least one piece of WUS configuration information of a terminal, where the WUS configuration information is used for determining a power reference source for the terminal to transmit an uplink WUS and/or transmission power of the uplink WUS

S620

The network side device transmits the at least one piece of WUS configuration information to the terminal

FIG. 6

700

701

First obtaining module

702

Determining module

FIG. 7

800

801

Second obtaining module

802

Transmit module

FIG. 8

900

Communication device

901 Processor ⟺ Memory 902

FIG. 9

1000

Radio frequency unit — 1001

Network module — 1002

1010

Memory
1009
Application program
Operating system

Processor

Audio output unit — 1003

1004
Input unit
Graphics processing unit — 10041
Microphone — 10042

Interface unit — 1008

User input unit — 1007
Touch panel — 10071
Another input device — 10072

1006
Display unit
Display panel — 10061

Sensor — 1005

FIG. 10

**1100**

**1101**

Network side device

Processor **1104**

Bus interface

Radio frequency apparatus **1102**

Memory **1105**

Baseband apparatus **1103**

Network interface

**1106**

FIG. 11

## INTERNATIONAL SEARCH REPORT

| International application No. |
|---|
| **PCT/CN2023/109810** |

| | |
|---|---|
| **A.** | **CLASSIFICATION OF SUBJECT MATTER** |
| | H04W52/02(2009.01)i |

According to International Patent Classification (IPC) or to both national classification and IPC

| | |
|---|---|
| **B.** | **FIELDS SEARCHED** |

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNKI, DWPI, CNTXT, ENTXTC, 3GPP: 唤醒, 激活, 睡眠, 参考, 功率, 目标, 上行, 节能, 省电, 小区, wake?up, activat+, reference, WUS, WUR, WST, cell, NW, energy?sav+, UL, uplink, sleep

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| X | CN 107534900 B (HUAWEI TECHNOLOGIES CO., LTD.) 17 November 2020 (2020-11-17) description, paragraphs 0102-0163 | 1-24 |
| X | WO 2011125849 A1 (MITSUBISHI ELECTRIC CORP.) 13 October 2011 (2011-10-13) description, paragraphs 0183-0388 | 1-24 |
| A | CN 102421172 A (ALCATEL-LUCENT SHANGHAI BELL CO., LTD.) 18 April 2012 (2012-04-18) entire document | 1-24 |
| A | WO 2022100157 A1 (HUAWEI TECHNOLOGIES CO., LTD.) 19 May 2022 (2022-05-19) entire document | 1-24 |
| A | QUALCOMM INC. "Evaluation of Cell Wake-up Solutions for Energy Saving" *3GPP TSG-RAN WG3 #71 R3-110731*, 25 February 2011 (2011-02-25), entire document | 1-24 |

☐ Further documents are listed in the continuation of Box C.   ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **27 October 2023** | **01 November 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

| | | | INTERNATIONAL SEARCH REPORT | | International application No. |
| | | | Information on patent family members | | PCT/CN2023/109810 |

| Patent document cited in search report | | | Publication date (day/month/year) | Patent family member(s) | | | Publication date (day/month/year) |
|---|---|---|---|---|---|---|---|
| CN | 107534900 | B | 17 November 2020 | US | 2018352507 | A1 | 06 December 2018 |
| | | | | WO | 2017107104 | A1 | 29 June 2017 |
| | | | | EP | 3334211 | A1 | 13 June 2018 |
| WO | 2011125849 | A1 | 13 October 2011 | JP | 5404919 | B2 | 05 February 2014 |
| CN | 102421172 | A | 18 April 2012 | KR | 20130069827 | A | 26 June 2013 |
| | | | | WO | 2012042375 | A2 | 05 April 2012 |
| | | | | JP | 2013540392 | A | 31 October 2013 |
| | | | | EP | 2622936 | A2 | 07 August 2013 |
| | | | | US | 2013189932 | A1 | 25 July 2013 |
| WO | 2022100157 | A1 | 19 May 2022 | EP | 4231696 | A1 | 23 August 2023 |
| | | | | US | 2023284133 | A1 | 07 September 2023 |
| | | | | CN | 114501488 | A | 13 May 2022 |

Form PCT/ISA/210 (patent family annex) (July 2022)

**REFERENCES CITED IN THE DESCRIPTION**

**Patent documents cited in the description**

- CN 202210929174